(19) Europäisches Patentamt

European Patent Office

Office européen des brevets

(11) EP 1 703 304 A1

(12) EUROPEAN PATENT APPLICATION
published in accordance with Art. 158(3) EPC

(43) Date of publication:
20.09.2006 Bulletin 2006/38

(51) Int Cl.:
$G01V\ 3/30$ (2006.01)

(21) Application number: 04802419.4

(22) Date of filing: 02.12.2004

(86) International application number:
PCT/CN2004/001403

(87) International publication number:
WO 2005/083468 (09.09.2005 Gazette 2005/36)

(84) Designated Contracting States:
DE FR

(30) Priority: 25.12.2003 CN 200310113035

(71) Applicants:
• ZHOU, Renan
Guanshang
Kunming
Yunnan 650200 (CN)
• GUO, Ziren
Guanshang
Kunming
Yunnan 650200 (CN)

(72) Inventors:
• ZHOU, Renan
Guanshang
Kunming
Yunnan 650200 (CN)
• GUO, Ziren
Guanshang
Kunming
Yunnan 650200 (CN)

(74) Representative: Brandl, Ferdinand Anton et al
Winter, Brandl, Fürniss, Hübner,
Röss, Kaiser, Polte
Partnerschaft
Patent- und Rechtsanwaltskanzlei
Alois-Steinecker-Strasse 22
85354 Freising (DE)

(54) **THE METHOD AND APPARATUS FOR MEASURING RESISTIVITY OF EARTH BY ELELCTROMAGNETIC WAVES**

(57) This invention involves a method and an apparatus for measuring the electromagnetic wave resistivity of the earth, which samples data from strata with an electric field sensor, a magnetic field sensor and a data collection system connected to them, implements collection controlling, data storage and processing on the sampling data according to a basic relational expression between a strata depth (H) and a propagation frequency (F) and a basic relational expression between the electromagnetic wave resistivity (p) and the strata depth (H), and realizes continuous measurement of the electromagnetic wave resistivity of the earth. The invention directly calibrates the relationship between the propagation frequency and the strata depth by using actual data, modifies the traditional method which may obtain the depth or thickness of strata by using multi-variable theoretical formula so as to make the resistivity of the strata as a unique variable. This method of the invention greatly improves the precision of measured depth of electromagnetic wave. The method and the apparatus may process the collected data on-the-spot, and obtain the curves of the electromagnetic wave which varies with the depth at any time. The method and the apparatus of the invention can be directly used to explore mineral resources with the effect of decreasing the number of drill well and increasing the overall exploration benefits.

FIG.1

**Description**

**FIELD OF THE INVENTION**

The present invention relates to a method and an apparatus used in geophysical exploration, in particular, a method and an apparatus for measuring electromagnetic wave resistivity by directly converting a frequency into a depth.

**BACKGROUND OF THE INVENTION**

Traditional magnetotelluric sounding methods began in 1950s, which has been 50 years up to now. These methods belong to a geophysical method for studying the electric nature of the earth based on the principle of electromagnetic induction. Among the various methods for studying the electric nature of the earth by means of the electric methods and the electromagnetic methods, the magnetotelluric sounding method has many advantages, such as deeper measured depth, strong distinguishing ability, narrower iso-value range, low working cost and lighter and convenient outdoor equipment without being shielded by high resistant layer. To a large extent, this is a result of the fact that the magnetotelluric sounding method utilizes natural alternative electromagnetism with wide frequency band and huge energy as field source. The magnetotelluric sounding method is founded on the wave equations of electromagnetic wave. The hypothesis precondition of the scalar quantity impedance of this method is that planar electromagnetic waves vertically incident into the earth surface and that strata of the earth is in a form of horizontal stratified media. When strata of the earth is in a form of horizontal nonuniform structure and has anisotropy, strata impedance varies with the time and the direction of the measurement, and at this time the tensor impendence theory for magnetotelluric sounding method will be used. Based on the basic theories for magnetotelluric sounding method, former U.S.S.R., U.S.A., France, Germany, Canada and etc al. have developed various magnetotelluric sounding instrument, China has also developed this kind of instrument. According to the theories for electromagnetically measuring depth of the earth, the interpretation methods for data from outdoor observation are proposed, wherein quantitative interpretation is to inverse delaminated layer of strata with electric nature mainly based on apparent resistivity curve. The computer used for real-time measurement can automatically inverse in a manner that actual measured curve will be compared with a theoretical curve which is computed by given initial parameters (Hi, pi) and parameters will be continuously modified according to the minimum variance theory to obtain a theoretical curve that best fits the measured curve. The parameter corresponding to this theoretical curve is the solution of inversion. Later, another inversion method for magnetotelluric sounding in a continuous one-dimensional model had been proposed. It is deemed that the resistivity of the earth's media is isotropic and continuously varies with depth. This inversion method still computes a theoretical curve from an initial model, compares this theoretical curve with the actual measured curve, modifies the initial model so as to gradually approach the actual measured curve, and finally obtains a resistivity curve in which the resistivity continuously varies with depth and is approved through the uniqueness evaluation. The magnetotelluric sounding method can be applied to the study on the earth's mantle, general investigation and exploration on the structure of sedimentary basin and the structure containing petroleum and gas, search and exportation for thermal field, earthquake forecast, and exploration for metal minerals and underground water source, etc.

Although the magnetotelluric sounding method has been widely applied, since it has low precision of exploration, the thickness of each stratified layer is often up to hundreds of meters, and sometimes even thousands of meters, but it is quite seldom up to tens of meters. Therefore, it is difficult to make great contributions to the mineral exploration and its efficiency needs to be further improved.

**SUMMARY OF THE INVENTION**

An object of the present invention is to overcome the above defects and provide a method and an apparatus for measuring electromagnetic wave resistivity of the earth with large detection depth, high precision, and high efficiency without being shielded by high resistant layer.

A method for measuring electromagnetic wave resistivity of the earth according to the invention is provided, said method samples data from strata with an electric field sensor, a magnetic field sensor and a data collection system connected to them, implementing collection controlling, data storage and processing on the sampling data according to a basic relational expression between a strata depth (H) and a propagation frequency (F) and a basic relational expression between the electromagnetic wave resistivity (p) and the strata depth (H), and realizing continuous measurement of the electromagnetic wave resistivity of the earth, said method comprises:

a first step of establishing a linear coordinate system for observation and
presetting initial collection parameters, wherein:
the relational expression between the propagation frequency and the strata depth in the linear coordinate system for observation is

$$F = a + bK'/H \qquad (1)$$

where

F is the propagation frequency and its unit is Hz;
H is the strata depth and its unit is meter;
a is a surface-layer coefficient which is a small value and can be neglected in the first step;
b is a coefficient in regional stratum resistivity which varies with the depth and value of which is set to be 0.1;
K' is a depth of collection which is defined during the propagation of the electromagnetic wave in the strata;

the presetting initial collection parameters are an initial measuring depth value (H1), an end measuring depth value (H2), and a sampling interval value (S), wherein the units of H1, H2 and S are meter;
a second step of determining a depth coefficient by sub-steps as follows:
selecting a known drilling well in a detecting region or its adjacent regions and implementing a detecting process around the known drilling well and obtaining a curve of the electromagnetic wave resistivity, comparing the curve with a curve of the electromagnetic wave resistivity of the known drilling well; and
intercepting a segment from the measured curve of the electromagnetic wave resistivity and comparing the segment with the curve of electromagnetic wave resistivity of the known drilling well, and obtaining a sampling spacing S' according to a following equation:

$$S' = (Hp2 - Hp1)/(L2 - L1) \qquad (2)$$

where

Hp1 is a depth of a characteristic point of a first well logging curve of the known drilling well and its unit is meter;

Hp2 is a depth of a characteristic point of a second well logging curve of the known drilling well and its unit is meter;
L1 is the number of a collection point of a newly measured curve of the electromagnetic wave resistivity which has similar characteristics as that of the characteristic point of the curve of the first well logging;
L2 is the number of a collection point of a newly measured curve of the electromagnetic wave resistivity which has similar characteristics as that of the characteristic point of the curve of the second well logging;
Let

$$E = S'/S \qquad (3)$$

and then

$$B = EbK'$$

where

B is an actually determined depth coefficient which is used to substitute the value of bK' in the equation (1) to conducting conversion between the frequency and the depth. After simplifying, the equation (1) becomes:

$$H=BT \qquad\qquad (4)$$

where

T is a period and its unit is microsecond;

a third step of calibrating a surface-layer depth coefficient (Ha) by sub-steps as follows:
comparing the curve determined in the second step with the curve of the electromagnetic wave resistivity of the known drilling well on the whole measured segments, a value of system error between depth of each characteristic point is:

$$Ha=Hd–Hc$$

where

Ha is a surface-layer depth coefficient;
Hd is a depth of the characteristic point of electrical well logging of the known drilling well;
Hc is a depth of said characteristic point of the electromagnetic wave resistivity curve;

and the units for Ha, Hd, and Hc are meter;
calibrating the depth of the surface layer for the measured depth of the curve of the electromagnetic wave resistivity by said surface-layer depth coefficient Ha, the calibrated initial measured depth is:

$$H1j = H1\underline{+}Ha;$$

a fourth step of selecting other collection parameters in such a manner as follows:

(1) determining a starting depth or a finishing depth for collection according to design requirement;
(2) selecting sampling interval;

a. 5 meter, 10 meter or 20 meter as sampling interval for comparing between regional strata and tracing electrical interface of strata;
b. 0.2 meter, 0.5 meter or 1 meter sampling interval for tracing and detecting ore bed such as oil bed, coal bed and metal ore bed or a crack band;
c. set number of sampling point:

taking 8 points when the finishing depth is less than or equal to 1000 meter;
taking 16 points when the finishing depth is less than or equal to 2000 meter;
taking 32 points when the finishing depth is less than or equal to 4000 meter;
taking 64 points when the finishing depth is less than or equal to 8000 meter;

d. values of sampling period is 128, 64, 32 and 16, respectively;

(3) providing channel gain: select a first channel (CH1)and a second channel (CH2) while using double sensors; select a first channel to an eight channel (CH1-CH8) while using multi sensors;
(4) providing a lowpass filter: using an automatic tracing filter when measuring in shallow strata and a region of strong industrial power supply interference, but not using an automatic tracing filter when measuring in deep strata and a region of weak industrial power supply interference;

a fifth step of collecting data and processing on-the-spot by sub-steps as follows:
collecting data with equipments which is calibrated and set with corresponding value in the steps before the fifth step and confirming to meet a quality standard of the original data; processing the data on-the-spot: calling collected data into said system of collection control, data storage and processing, inputting said initial measuring depth and the calibrated sampling interval, processing the data and determining the proportion of the vertical coordinate with respect to the horizontal coordinate at the interface, and obtain the resulting graph of data processing.

In the method for measuring electromagnetic wave resistivity of the earth according to the invention, conditions for selecting the known drilling well are: (1) the strata is representative; (2) data of resistivity well logging or drill well core are available; (3) an inclination angle of the strata is less than or equal to 15°; and (4) there is no interference of strong industrial electricity network on a surface of the earth.

In the apparatus for measuring the electromagnetic wave resistivity of the earth according to the invention, the apparatus comprises an electric field sensor (1) which receives a signal of electric field intensity, an magnetic field sensor (2) which receives a signal of magnetic field intensity, at least two sets of preamplifiers (3) which are respectively connected to said electric field sensor (1) and said magnetic field sensor (2), a data collection system (4) which is connected to said preamplifiers (3), and a system of collection control, data storage and processing (5); said data collection system (4) is connected to said system of collection control, data storage and processing (5) via a data bus and a control bus; said system of collection control, data storage and processing (5) stores a H-F basic relational expression between a strata depth and a propagation frequency, a $\rho$-H basic relational expression between an electromagnetic wave resistivity and the strata depth, and program sequences for realizing continuous measurement of the electromagnetic wave resistivity of the earth based on storing and processing the data according to said relational expressions.

In the apparatus for measuring the electromagnetic wave resistivity of the earth according to the invention, said system of collection control, data storage and processing (5) uses notebook computer with a printer port.

In the apparatus for measuring the electromagnetic wave resistivity of the earth according to the invention, said electric field sensor (1) comprises at least one pair of lead electrodes or copper electrodes or other non-polarized electrodes; said magnetic field sensor uses multiturn annular induction coils, or multiturn annular induction coils with negative feedback of flux.

In the apparatus for measuring the electromagnetic wave resistivity of the earth according to the invention, said preamplifiers (3) include an input amplifier, a multistage trap, a lowpass filter, and an output amplifier.

In the apparatus for measuring the electromagnetic wave resistivity of the earth according to the invention, said data collection system (4) is a high-speed data collection system.

The present invention provides a method and an apparatus for measuring the electromagnetic wave resistivity of the earth with large detection depth, high precision, and high efficiency without being shielded by high resistant layer and realizes continuous measurement of the electromagnetic wave resistivity of the earth. This method directly calibrates the relationship between the propagation frequency and the strata depth by using actual data, modifies the traditional method which may obtain the depth or thickness of strata by using multi-variable theoretical formula so as to make the resistivity of the strata as a unique variable. This method of the invention greatly improves the precision of measured depth of electromagnetic wave. The method and the apparatus may process the collected data on-the-spot, and obtain the curves of the electromagnetic wave which varies with the depth at any time. The method and the apparatus of the invention can be directly used to explore mineral resources with the effect of decreasing the number of drill well and increasing the overall exploration benefits. It has been demonstrated from experimental results that the apparatus for measuring the electromagnetic wave resistivity can achieve the following targets:

error in depth:

the error is not more than 5% in region where well has been calibrated;

precision in stratification:

greater than or equal to 1 meter for high resistivity strata;
greater than or equal to 0.5 meter for low resistivity strata;

depth of detection:

40 - 8000 meter;
300 - 8000 meter (in region where strong industrial electrical source interference is present on the surface);

detection time:

working hour is less than or equal to one hour for each detection point per time (depth of detection is less than or equal to 4000 meter);

weight of the apparatus:

20kg and the apparatus has simple requirement on the working site.

**BRIEF DESCRIPTION OF DRAWINGS**

Fig. 1    is a block diagram of the apparatus for measuring the electromagnetic wave resistivity of the earth according to the invention.

Fig. 2    is a block diagram of preamplifiers in the apparatus for measuring the electromagnetic wave resistivity of the earth according to the invention.

Fig. 3    is a graph for showing results of processed data from the apparatus for measuring the electromagnetic wave resistivity of the earth according to the invention.

**DETAILED DESCRIPTION OF THE PREFERRED EMBODIMENTS**

The method and the apparatus for measuring the electromagnetic wave resistivity of the earth according to the invention is designed in such an innovative concept that: a relationship between the strata depth and the propagation frequency of the electromagnetic wave is linear under certain conditions, the strata resistivity will become a unique variable by directly calibrating the relationship between the propagation frequency and the strata depth by using actual data and modifying the traditional method that the depth or the thickness of the stratum is obtained by multi-variable theoretical equations, then once the electric field intensity and the magnetic field intensity at each collection point are obtained, the curve of the strata resistivity that varies with the strata depth can be obtained.

According to electromagnetic wave propagation theory, the field intensity propagates in strata in exponential manner, or the amplitude of the electric field attenuates with the strata depth in exponential manner. In the traditional methods of electromagnetic wave, the depth of detection of an apparatus can be estimated by skin depth. The depth of collection of the invention is dependent on the sensitivity of the apparatus and the intensity of the incident field source. When the intensity of the incident field source is kept constant, higher is the sensitivity of the apparatus, deeper is the depth of collection. The depth of detection has a large range, for example the depth of detection is defined as that when the amplitude attenuated to $1/e^3$ (5%), the value of depth of collection K' becomes three times of the value of skin depth K. This depth of detection can not be achieved by current apparatuses. Under certain conditions, the relationship between the strata depth and the propagation frequency of the electromagnetic wave is linear.

First, the apparatus for measuring electromagnetic wave resistivity of the earth designed according to the technical concept of the invention will be introduced.

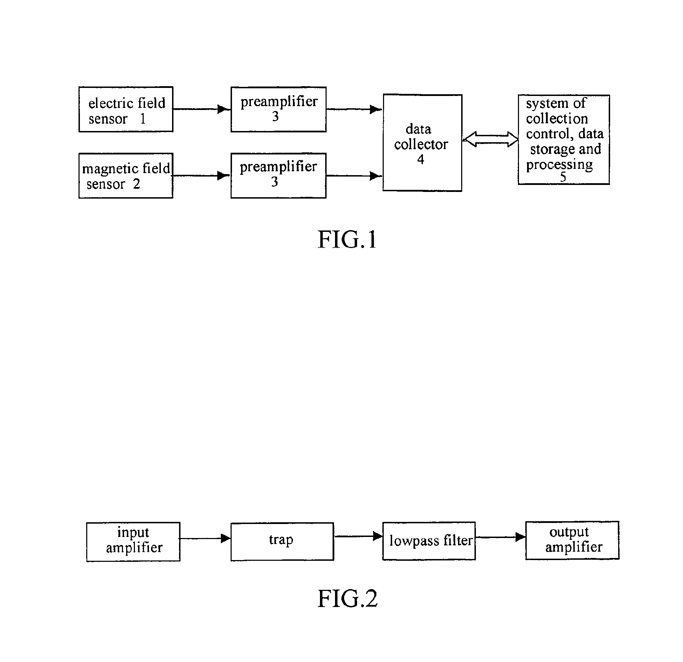

As shown in Fig. 1, the apparatus for measuring electromagnetic wave resistivity of the earth according to the invention comprises five parts, namely, an electric field sensor 1 which receives a signal of the electric field intensity, a magnetic field sensor 2 which receives a signal of the magnetic field intensity, two preamplifiers 3, a data collection system 4, and a system of collection control, data storage and processing 5.

An output port of the electric field sensor 1 is connected to an input port of one preamplifier 3, an output port of the magnetic field sensor 2 is connected to an input port of another preamplifier 3, output ports of two (or multiple) preamplifiers 3 are respectively connected to two (or multiple) input ports CH1, CH2...CHn of the data collection system 4. There are two ways to connect the data collection system 4 to the system of collection control, the data storage and processing 5: one way is that a parallel port of the data collection system 4 is connected to a printer port of the system of collection control, data storage and processing 5; the other way is that a parallel port of the data collection system 4 is connect to a parallel port of the system of the collection control, data storage and processing 5. Data collected in the data collection system 4 is transmitted to the system of collection control, data storage and processing 5, at the same time the system of collection control, data storage and processing 5 sends control and collection instructions to the data collection system 4.

The electric field sensor 1 comprises one pair (or pairs) of copper electrodes or lead electrodes, or other non-polarized electrodes. The magnetic field sensor generally uses multiturn annular induction coils or multiturn annular induction coils with negative feedback of flux. The two sensors receive a signal of the electric field intensity (Ex) and a signal of the magnetic field intensity (Hy), respectively.

As shown in Fig. 2, each of the preamplifiers 3 comprises an input amplifier, a multistage trap, a lowpass filter and an output amplifier, which amplifies the signals respectively received by the electric field sensor and the magnetic field sensor and filters interference caused by industrial power supply and its harmonic waves so as to prevent occurrence of aliasing interference.

The data collection system 4 is generally a high-speed data collection system. Its main performances include: sampling frequency which is 1MHz and can be controlled and adjusted by programs; the number of channels which is greater than or equal to 6; A/D conversion which has 12 or 16 bits with adjustable gain in a range of 1-100; synchronism of wave forms, and remotely controlled antialiasing filter. Under the control of the programs, the data collection system 4 digitizes analog signals input from the preamplifiers, and outputs digital signals, which are divided into groups according to their frequencies, to the system of collection control, data storage and processing 5.

The system of collection control, data storage and processing 5 is high-performance notebook computers, in which a program preset according to a frequency-depth basic equation F=a+ B/H described in the method and a program preset with each measuring parameters are stored. The main task of the system is to programmed-control the data collection system 4, accomplish the task of data collection in schedule and record the resulting data in hard disk. The notebook computer further stores a program for the data processing, which can convert the collected electric field intensity Ex and the collected magnetic field intensity Hy into the electromagnetic wave resistivity according to a basic relational expression of $\rho=|Ex/Hy|^2/\omega\mu$ in the magnetotelluric sounding theory, and output the final results and printing them.

Design of the controlling software of the apparatus fully reflects the design concept of the invention, i.e. continuously changing frequency for collection in order to collect information for different depths, and thereby the electric field intensity and the magnetic field intensity at points corresponding to depths; sampling at a regular interval which is up to 0.2 meter depth; sampling in any segment of depth from any points of depth in a range of the technical qualifications; real-time displaying the curves of the electric field intensity and the magnetic field intensity which linearly vary with the depth; processing the collected data on-the-spot by using data processing programs, and thereby obtaining a curve of the electromagnetic wave resistivity $\rho$ which varies with the depth H.

Hereinafter, the method for measuring electromagnetic wave resistivity of the earth according to the invention will be described, the steps of the method are:

a first step: establishing a linear coordinate system for observation, and
preset initial collection parameters, wherein:

the relational expression between the propagation frequency and the strata depth in the linear coordinate system for observation is:

$$F=a+ bK'/H \qquad\qquad (1)$$

where

F is the propagation frequency and its unit is Hz;
H is the strata depth and its unit is meter;
a is a surface-layer coefficient which is a small value and can be neglected in the first step;
b is a coefficient in regional stratum resistivity which varies with the depth and value of which is set to be 0.1;
K' is a depth of collection which is defined during the propagation of the electromagnetic wave in the strata;

the preset initial collection parameters are an initial measuring depth value (H1), an end measured depth value (H2), and a sampling interval value (S), wherein the units of H1, H2 and S are meter;

before measurement, the initial measuring depth value H1, the end measuring depth value H2 and the sampling interval value S according to the design requirement are converted into the parameter F determined by the equation (1) and preset into an interface of each parameter of the apparatus for measuring the electromagnetic wave resistivity of the earth so as to make the apparatus to be normally operated.

a second step: determining a depth coefficient (B) by sub-steps as follows:

First, select a known drilling well in a detecting region or its adjacent regions. Conditions for selecting the known drilling well are: (1) the strata is representative; (2) data of resistivity well logging or drill well core are available; (3) an inclination angle of the strata is less than or equal to 15°; and (4) there is no interference of strong industrial electricity network on a surface of the earth. At a region without a known drilling well, a previous depth coefficient in other region which is similar to this region or data of other strata stratifying with electrical nature can be used. After the known drilling well is selected, a detecting process will be implemented around the known drilling well to obtain a curve of the electromagnetic wave resistivity, compare the curve with a curve of the electromagnetic wave resistivity of the known drilling well, and determine whether both of curves are similar at each characteristic point. If the dependence of these points is not good, the electric field sensor and the magnetic field sensor will be turned at a certain angle so as to collect data again until a curve with good dependence is obtained. At this time, the vertical coordinate of the measured curves represents the electromagnetic wave resistivity, the electric field intensity and the magnetic field intensity, and the horizontal coordinate of the measured curves represents sequence number of the collected points. Then, the parameter B can be determined according to the following steps:

Intercepting a segment from the measured curve of the electromagnetic wave resistivity and comparing the segment with the curve of electromagnetic wave resistivity of the known drilling well, and obtaining a sampling spacing S' according to a following equation:

$$S' = (Hp2 - Hp1)/(L2 - L1) \qquad (2)$$

where

Hp1 is a depth of a characteristic point of a first well logging curve of the known drilling well and its unit is meter;
Hp2 is a depth of a characteristic point of a second well logging curve of the known drilling well and its unit is meter;
L1 is the sequence number of a collection point of a newly measured curve of the electromagnetic wave resistivity which has similar characteristics as that of the characteristic point of the curve of the first well logging;
L2 is the sequence number of a collection point of a newly measured curve of the electromagnetic wave resistivity which has similar characteristics as that of the characteristic point of the curve of the second well logging;
Let

$$E = S'/S \qquad (3)$$

and then

$$B = EbK'$$

where
B is an actually determined depth coefficient which is used to substitute the value of bK' in the equation (1) to conduct conversion between the propagation frequency and the strata depth; after simplifying, the equation (1) becomes:

$$H = BT \qquad (4)$$

where
T is a period and its unit is microsecond;
B is among a range of 0.001-1.000;

In a new region without a well which depth is not calibrated, a depth coefficient of a previous depth coefficient in other region which is similar to this region can be used. The measurement can be implemented after the basic relational expression is calibrated, and agreeable results can be also obtained. A set of the depth coefficients which are verified by practices is preset in the apparatus for use.

a third step: calibrating a surface-layer depth coefficient (Ha) by sub-steps as follows:

Comparing the curve determined in the second step with the curve of the electromagnetic wave resistivity of the known drilling well on the whole measured segments, a value of system error between depth of each characteristic point is:

$$Ha=Hd-Hc$$

where

Ha is a surface-layer depth coefficient;
Hd is a depth of the characteristic point of electrical well logging of the known drilling well;
Hc is a depth of said characteristic point of the electromagnetic wave resistivity curve;

and the units for Ha, Hd, and Hc are meter;
Calibrating the depth of the surface layer for the measured depth of the curve of the electromagnetic wave resistivity by the surface-layer depth coefficient Ha, the calibrated initial measured depth is:

$$H1j = H1 \pm Ha;$$

a fourth step: selecting other collection parameters in such a manner as follows:

(1) determining a starting depth or a finishing depth for collection according to design requirement;
(2) selecting sampling interval:

a. 5 meter, 10 meter or 20 meter as sample interval for comparing between regional strata and tracing electrical interface of strata;
b. 0.2 meter, 0.5 meter or 1 meter as sample interval for tracing and detecting ore bed such as oil bed, coal bed and metal ore bed or a crack band;
c. set number of sampling point:

taking 8 points when the finishing depth is less than or equal to 1000 meter;
taking 16 points when the finishing depth is less than or equal to 2000 meter;
taking 32 points when the finishing depth is less than or equal to 4000 meter;
taking 64 points when the finishing depth is less than or equal to 8000 meter;

d. values of sampling period are 128, 64, 32 and 16, respectively;

(3) providing channel gain: select a first channel (CH1) and a second channel (CH2) while using double sensors; select a first to an eight channels (CH1-CH8) while using multi sensors. On a basis that the signal of targeted strata segment can be assured to be collected, the lower gain is selected so as to suppress the interference from the industrial alternative current power.
(4) providing a lowpass filter: using an automatic tracing filter when measurement being processing in shallow strata and a region of strong industrial power supply interference, but not using an automatic tracing filter when measurement being processing in deep strata and a region of weak industrial power supply interference.

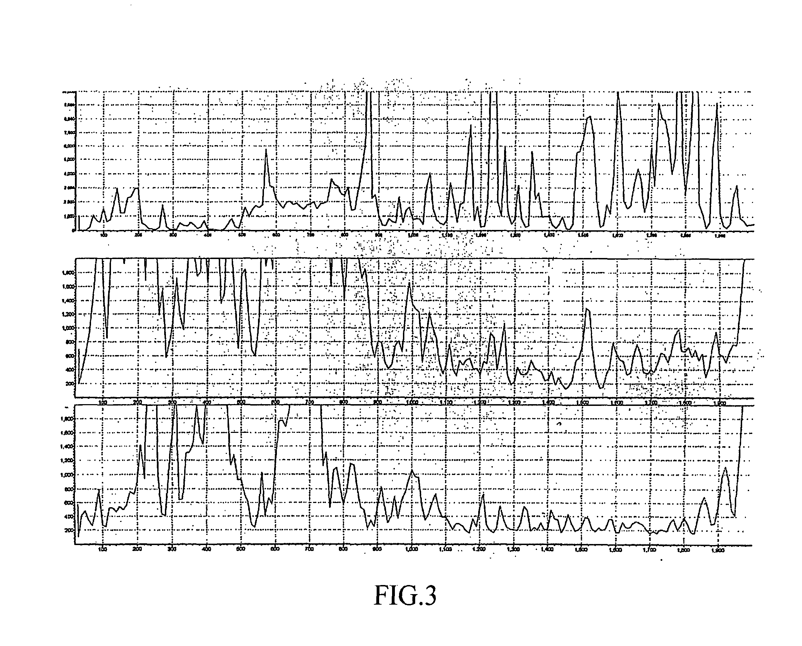

a fifth step: collecting data and process on-the-spot by sub-steps as follows:
Collecting data with equipment which is calibrated and set with corresponding value in the steps before the fifth step and confirming to meet a quality standard of the original data; processing the data on-the-spot: calling the collected data into the system of collection control, data storage and processing, inputting the initial measuring depth and the calibrated sampling interval, processing data and determining the proportion of the vertical coordinate with respect to the horizontal coordinate at the interface, and obtain the resulting graph of data processing. As shown in Fig. 3, the horizontal coordinate is a linear coordinate and represents a depth, the depth scale can be adjusted according to the requirements; for the vertical coordinate, it represents the electromagnetic wave resistivity in the upper curve and can be selected as linear coordinate or logarithmic coordinate, it represents the electric field intensity in the middle curve, and it represents the magnetic field intensity in the lower curve, all the scales of them can be adjusted.

**Industrial Application**

In comparison with the existing methods for measuring electromagnetic wave resistivity of the earth, when the depth of collection is same, the method according to the invention greatly improves the precision of stratifying so that the magnetotelluric sounding method can be applied from only general investigation to exploration extent, even a part of wells will not be drilled so as to improve the whole benefit of the exploration. When the depth of collection is same, the requirement on sensitivity of the apparatus of the invention is very low so that it is advantageous to manufacture the apparatus. The measuring time is shortened and effects of outside interference, the drift of the apparatus and polarization of electrodes are reduced and thus the efficiency is increased. It makes the interpretation on data from outdoor observation simple. In one-dimensional interpretation, when the depth is determined, the electromagnetic wave resistivity can be easily obtained by merely reading out the electric field intensity and the magnetic field intensity at each depth point, so that real-time processing interpretation can be conveniently realized. Since a resistivity curve which varies with the depth can be measured without drilling a well, the ability to solve geological problem with exploration of physical geography are improved, such as monitoring the layer flood out by water in oil field, searching for distribution of crack band, comparison between layers, tracing coal bed, metal ore bed and etc. The method and the apparatus for measuring the resistivity of electromagnetic waves of the earth are effective in different stages of exploration, so that the whole benefits of exploration can be improved. At the same time, they are also an effective for deeper exploration. Furthermore, the invention can also be applied to an electromagnetic measuring depth with a source.

## Claims

1. A method for measuring electromagnetic wave resistivity of the earth, which samples from strata with an electric field sensor, a magnetic field sensor and a data collection system connected to them, implements collection controlling, data storage and processing on the sampling data according to a basic relational expression between a strata depth (H) and a propagation frequency (F) and a basic relational expression between the electromagnetic wave resistivity (p) and the strata depth (H), and realizes continuous measurement of the electromagnetic wave resistivity of the earth, comprising:

   a first step of establishing a linear coordinate system for observation, and presetting initial collection parameters:
   the relational expression between the propagation frequency and the strata depth in the linear coordinate system for observation is:

$$F = a + bK'/H \qquad (1)$$

   where

   F is the propagation frequency and its unit is Hz;
   H is the strata depth and its unit is meter;
   a is a surface-layer coefficient which is a small value and can be neglected in the first step;
   b is a coefficient in regional strata resistivity which varies with the strata depth and value of which is set to be 0.1;
   K' is a depth of collection which is defined during the propagation of the electromagnetic wave in the strata;

   the preseting initial collection parameters being an initial measuring depth value (H1), an end measuring depth value (H2), and a sampling interval value (S), wherein the units of H1, H2 and S are meter;
   a second step of determining a depth coefficient (B) by sub-steps as follows:
   selecting a known drilling well in a detecting region or its adjacent regions and implementing a detecting process around the known drilling well and obtaining a curve of the electromagnetic wave resistivity, comparing the curve with a curve of the electromagnetic wave resistivity of the known drilling well; and
   intercepting a segment from the measured curve of the electromagnetic wave resistivity and comparing the segment with the curve of electromagnetic wave resistivity of the known drilling well, and obtaining a sampling spacing S' according to a following equation:

$$S' = (Hp2 - Hp1)/(L2 - L1) \qquad (2)$$

where

Hp1 is a depth of a characteristic point of a first well logging curve of the known drilling well and its unit is meter;
Hp2 is a depth of a characteristic point of a second well logging curve of the known drilling well and its unit is meter;
L1 is the number of a collection point of a newly measured curve of the electromagnetic wave resistivity which has similar characteristics as that of the characteristic point of the curve of the first well logging;
L2 is the number of a collection point of a newly measured curve of the electromagnetic wave resistivity which has similar characteristics as that of the characteristic point of the curve of the second well logging;
Letting

$$E=S'/S \qquad (3)$$

and then

$$B=EbK'$$

where

B is an actually determined depth coefficient which is used to substitute the value of bK' in the equation (1) to conduct conversion between the propagation frequency and the strata depth; after simplifying, the equation (1) becoming:

$$H=BT \qquad (4)$$

where
T is a period and its unit is microsecond;
B is among a range of 0.001-1.000;

a third step of calibrating a surface-layer depth coefficient (Ha) by sub-steps as follows:
comparing the curve determined in the second step with the curve of the electromagnetic wave resistivity of the known drilling well on the whole measured segments, a value of system error between depth of each characteristic point being:

$$Ha=Hd-Hc \qquad (5)$$

where

Ha is a surface-layer depth coefficient;
Hd is a depth of the characteristic point of electrical well logging of the known drilling well;
Hc is a depth of said characteristic point of the electromagnetic wave resistivity curve;

and the units for Ha, Hd, and Hc are meter;
calibrating the surface-layer depth for the measured depth of the curve of the electromagnetic wave resistivity by said surface-layer depth coefficient Ha, the calibrated initial measured depth being:

$$H1j=H1\pm Ha;$$

a fourth step of selecting other collection parameters in such a manner as follows:

(1) determining a starting depth or a finishing depth for collection according to design requirement;
(2) selecting sampling interval:

a. 5 meter, 10 meter or 20 meter as sampling interval for comparing between regional strata and tracing electrical interface of strata;
b. 0.2 meter, 0.5 meter or 1 meter as sampling interval for tracing and detecting ore bed such as oil bed, coal bed and metal ore bed or a crack band;
c. setting number of sampling point:

taking 8 points when the finishing depth is less than or equal to 1000 meter;
taking 16 points when the finishing depth is less than or equal to 2000 meter;
taking 32 points when the finishing depth is less than or equal to 4000 meter;
taking 64 points when the finishing depth is less than or equal to 8000 meter;

d. values of sampling period being 128, 64, 32 and 16, respectively;

(3) providing channel gain: selecting a first channel (CH1) and a second channel (CH2) while using double sensors; selecting a first to an eight channels (CH1-CH8) while using multi sensors;
(4) providing a lowpass filter: using an automatic tracing filter when measuring in shallow strata and a region of strong industrial power supply interference, but not using an automatic tracing filter when measuring in deep strata and a region of weak industrial power supply interference;

a fifth step of collecting data and processing on-the-spot by sub-steps as follows:
collecting data with equipments which is calibrated and set with corresponding value in the steps before the fifth step and confirming to meet a quality standard of the original data; processing the data on-the-spot: calling collected data into said system of collection control, data storage and processing, inputting said initial measuring depth and the calibrated sampling interval, processing the data and determining the proportion of the vertical coordinate with respect to the horizontal coordinate at the interface, and obtaining the resulting graph of data processing.

2. The method according to claim 1, **characterized in that** conditions for selecting the known drilling well are: (1) the strata is representative; (2) data of resistivity well logging or drill well core are available; (3) an inclination angle of the strata is less than or equal to 15°; and (4) there is no interference of strong industrial electricity network on a surface of the earth.

3. An apparatus for measuring the electromagnetic wave resistivity of the earth, **characterized in that** said apparatus comprises an electric field sensor (1) which receives a signal of electric field intensity, an magnetic field sensor (2) which receives a signal of magnetic field intensity, at least two sets of preamplifiers (3) which are respectively connected to said electric field sensor (1) and said magnetic field sensor (2), a data collection system (4) which is connected to said preamplifiers (3), and a system of collection control, data storage and processing (5); said data collection system (4) is connected to said system of collection control, data storage and processing (5) via a data bus and a control bus; said system of collection control, data storage and processing (5) stores a H-F basic relational expression between a strata depth (H) and a propagation frequency (F), a ρ-H basic relational expression between an electromagnetic wave resistivity (ρ) and the strata depth (H), and program sequences for realizing continuous measurement of the electromagnetic wave resistivity of the earth by storing and processing the data according to said relational expressions.

4. The apparatus according to claim 3, **characterized in that** said system of collection control, data storage and processing (5) uses notebook computer with a printer port.

5. The apparatus according to claim 3 or 4, **characterized in that** said electric field sensor (1) comprises at least one pair of lead electrodes or copper electrodes or other non-polarized electrodes; said magnetic field sensor uses multiturn annular induction coils, or multiturn annular induction coils with negative feedback of flux.

6. The apparatus according to claim 5, **characterized in that** said preamplifiers (3) include an input amplifier, a multistage trap, a lowpass filter, and an output amplifier.

**7.** The apparatus according to claim 6, **characterized in that** said data collection system (4) is a high-speed data collection system.

| electric field sensor  1 | → | preamplifier 3 | → | | |
| magnetic field sensor  2 | → | preamplifier 3 | → | data collector 4 | ⇔ | system of collection control, data storage and processing 5 |

FIG.1

| input amplifier | → | trap | → | lowpass filter | → | output amplifier |

FIG.2

FIG.3

# INTERNATIONAL SEARCH REPORT

| International application No. |
|---|
| PCT/CN2004/001403 |

**A. CLASSIFICATION OF SUBJECT MATTER**

IPC[7]: G01V3/30

According to International Patent Classification (IPC) or to both national classification and IPC

**B. FIELDS SEARCHED**

Minimum documentation searched (classification system followed by classification symbols)

IPC[7]: G01V3/30, G01V3/18, G01V3/12, G01V3/00, E21B47/00, E21B49/00,

Documentation searched other than minimum documentation to the extent that such documents are included in the fields searched

Electronic data base consulted during the international search (name of data base and, where practicable, search terms used)

earth, terra, electromagnetic, wave, resistivity, measure, measuring, measurement, depth, frequency, determine, determination, determining, survey, sensor, winding, loop, turn, coil, induce, induction,

**C. DOCUMENTS CONSIDERED TO BE RELEVANT**

| Category* | Citation of document, with indication, where appropriate, of the relevant passages | Relevant to claim No. |
|---|---|---|
| A | US4899112 (Brian Clark et al.) 06. February. 1990　(06. 02. 90): The whole document: | 1—7 |
| A | US4107597 (Richard A. Meador et al.) 15. August. 1978(15. 08. 78); The whole document; | 1—7 |
| A | US4107598 (Richard A. Meador et al.) 15. August. 1978 (15. 08. 78); The whole document; | 1—7 |
| A | CN1332380 (The Petroleum University of China) 23. 1 月. 2002　(23. 01. 2002); The whole document; | 1—7 |
| A | CN1237247 (John R. Jackson & M Arismendi, Jr.) 01. December. 2001 (01. 12. 2001); The whole document; | 1—7 |
| A | US6476609 (Michael S. Bittar) 05. November. 2001 (05. 11. 2001);The whole document; | 1—7 |
| A | US6163155 (Michael S. Bittar) 19. December. 2000(19. 12. 2000); The whole document; | 1—7 |
| A | US5469062 (Wallace H. Meyer, Jr.) 21. January. 1995 (21. 11. 95); The whole document; | 1—7 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02. March. (02. 03. 2005) | 14・APR 2005 (1 4・0 4・2 0 0 5) |
| Name and mailing address of the ISA/ | Authorized officer |
| No. 6, Xitucheng Road, Jimen Bridge, Haidian district, 100088 Beijing, P. R. China | YANG Yong—Kang |
| Facsimile No. (86-10)62019451 | Telephone No. (86-10)62085737 |

Form PCT/ISA /210 (second sheet) (January 2004)

## INTERNATIONAL SEARCH REPORT
### Information on patent family members

| International application No. |
| --- |
| PCT/CN2004/001403 |

| Patent document Cited in the search report | Publication Date | Patent family Member(s) | Publication date |
| --- | --- | --- | --- |
| US4899112 | 06. 2 月. 1990 (06. 02. 90) | EP0314573A | 03. May. 1989 (03. 05. 89) |
| | | BR8804695 | 23. May. 1989 (23. 05. 89) |
| | | NO8804589 | 24. May. 1989 (24. 05. 89) |
| | | US4968940 | 06. December. 1990 (06. 11. 90) |
| | | CN1033673 | 05. July. 1989 (05. 07. 89) |
| | | US4949045 | 14. August. 1990 (14. 08. 90) |
| | | CA1275442 | 23. October. 1990 (23. 10. 90) |
| | | DE3877516 | 25. Febrary. 1993 (25. 02. 93) |
| | | NO175499 | 11. July. 1994 (11. 07. 94) |
| US4107597 | 15. 8 月. 1978 (15. 08. 78) | CA1088624 | 28. October. 1980 (28. 10. 80) |
| | | GB1588865 | 29. April. 1981 (29. 004. 81) |
| US4107598 | 15. 8 月. 1978 (15. 08. 78) | GB2025620 | 23. January. 1980 (23. 01. 80) |
| | | DE2832433 | 14. Febrary. 1980 (14. 02. 80) |
| | | FR2432178 | 28. March. 1980 (28. 03. 80) |
| | | CA1092191 | 22. December. 1980 (22. 12. 80) |
| CN1237247 | 01. 12 月. 2001 (01. 12. 2001) | JP2001505301 | 17. April. 2001 (17. 04. 2001) |
| | | WO9809183 | 05. March. 1998 (05. 03. 98) |
| | | AU4043997 | 19. March. 1998 (19. 03. 98) |
| | | US5777478 | 07. July. 1998 (07. 07. 98) |
| | | NO9900932 | 20. April. 1999 (20. 04. 99) |
| | | EP0922238 | 16. June. 1999 (16. 06. 99) |
| | | NZ334267 | 28. Febrary. 2000 (28. 02. 2000) |
| | | AU718742 | 20. April. 2000 (20. 04. 2000) |
| | | BR9714492 | 25. April. 2000 (25. 04. 2000) |
| | | US6087833 | 11. July. 2000 (11. 07. 2000) |
| | | MX9901952 | 01. December. 1999 (01. 12. 99) |
| | | KR200035860 | 26. June. 2000 (26. 06. 2000) |
| CN1332380 | 23. 1 月. 2002 (23. 01. 2002) | None | |
| US6476609 | 05. 11 月. 2001 (05. 11. 2001) | WO0204986 | 17. January. 2002 (17. 01. 2002) |
| | | US2003051914 | 20. March. 2003 (20. 03. 2003) |
| | | NO200300015 | 05. march. 2003 (05. 03. 2003) |
| | | EP1315984 | 04. June. 2003 (04. 06. 2003) |
| US6163155 | 19. 12 月. 2000 (19. 12. 2000) | WO0045195 | 03. August. 2000 (03. 08. 2000) |
| | | NO200103707 | 18. September. 2001 (18. 09. 2001) |
| | | EP1155343 | 21. November. 2001 (21. 11. 2001) |

Form PCT/ISA /210 (patent family annex) (Oct 2000)

<table>
<tr><td colspan="2" align="center">**INTERNATIONAL SEARCH REPORT**<br>Information on patent family members</td><td colspan="2">International application No.<br>·  PCT/CN2004/001403</td></tr>
<tr><td align="center">Patent document<br>Cited in the search report</td><td align="center">Publication<br>Date</td><td align="center">Patent family<br>Member(s)</td><td align="center">Publication<br>date</td></tr>
<tr><td align="center">US5469062</td><td align="center">21 11 月. 1995 (21. 11. 95)</td><td align="center">CA2185029</td><td align="center">26. 8 月. 2003 (26. 08. 2003)</td></tr>
<tr><td></td><td></td><td align="center">WO9524663</td><td align="center">14. 9 月. 1995 (14. 09. 95)</td></tr>
<tr><td></td><td></td><td align="center">AU1981695</td><td align="center">25. 9 月. 1995 (25. 09. 95)</td></tr>
<tr><td></td><td></td><td align="center">US5574374</td><td align="center">14. 9 月. 1995 (14. 09. 95)</td></tr>
<tr><td></td><td></td><td align="center">GB2301442</td><td align="center">04. 12 月. 1996 (04. 12. 96)</td></tr>
<tr><td></td><td></td><td align="center">NO9603793</td><td align="center">08. 11 月. 1996 (08. 11. 96)</td></tr>
<tr><td></td><td></td><td align="center">GB2322199</td><td align="center">19. 8 月. 1998 (19. 08. 98)</td></tr>
<tr><td></td><td></td><td align="center">GB2322200</td><td align="center">19. 8 月. 1998 (19. 08. 98)</td></tr>
<tr><td></td><td></td><td align="center">GB2322201</td><td align="center">19. 8 月. 1998 (19. 08. 98)</td></tr>
<tr><td></td><td></td><td align="center">GB2322198</td><td align="center">19. 8 月. 1998 (19. 08. 98)</td></tr>
<tr><td></td><td></td><td align="center">US5811972</td><td align="center">22. 9 月. 1998 (22. 09. 98)</td></tr>
<tr><td></td><td></td><td align="center">NO315099</td><td align="center">07. 7 月. 2003 (07. 07. 2003)</td></tr>
</table>

Form PCT/ISA /210 (patent family annex) (Oct 2000)